# EUROPÄISCHE PATENTSCHRIFT

(11) **EP 3 679 259 B1**
(45) Veröffentlichungstag und Bekanntmachung des Hinweises auf die Patenterteilung: **03.03.2021**
(21) Anmeldenummer: 18769300.7
(22) Anmeldetag: 04.09.2018
(51) Int. Cl.: F16C 33/10, B21B 27/10

(54) **VERFAHREN ZUM BETRIEB EINER WALZ- ODER HÜTTENTECHNISCHEN ANLAGE**
METHOD FOR OPERATING A ROLLING TECHNOLOGY OR METALLURGICAL SYSTEM
PROCÉDÉ DE FONCTIONNEMENT D'UNE INSTALLATION DE LAMINAGE OU DE MÉTALLURGIE

(30) Priorität: 06.09.2017 DE 102017215713
(43) Veröffentlichungstag der Anmeldung: 15.07.2020
(73) Patentinhaber: SMS Group GmbH, 40237 Düsseldorf (DE)
(72) Erfinder: ALKEN, Johannes, 57076 Siegen (DE); PAWELSKI, Hartmut, 40883 Ratingen (DE); KNIE, Daniel, 57258 Freudenberg (DE); SCHELLMANN, Markus, 57080 Siegen (DE)
(74) Vertreter: Klüppel, Walter
(86) Internationale Anmeldenummer: PCT/EP2018/073708
(87) Internationale Veröffentlichungsnummer: WO 2019/048417

(56) Entgegenhaltungen:
- WO-A1-2009/106359
- CN-A- 101 718 297
- CN-B- 102 010 780
- DE-A1-102009 039 626
- DE-A1-102012 207 661
- DE-T2- 69 817 369
- US-A- 2 200 837
- US-A- 2 575 830
- US-A1- 2006 240 996
- US-A1- 2013 167 605

## Beschreibung

Die Erfindung betrifft ein Verfahren zum Betrieb einer Warm- oder Kaltwalzstraße in einer walz- oder hüttentechnischen Anlage, wobei die Warm- oder Kaltwalzstraße eine Anzahl von Walzgerüsten mit Stützwalzen umfasst, die mit mindestens einem Gleitlager gelagert sind, wobei das Gleitlager mit einem Schmierstoff versorgt wird.

Gleitgelagerte Walzen in einem Walzgerüst sind beispielsweise in der US 2 200 837 A beschrieben. Eine ähnliche Lösung zeigt die US 2 575 830 A. Eine Schmierstoffmischung mit spezieller Zusammensetzung offenbart die US 4 043 925 A.

Gleitlager, wie sie üblicherweise in der Walz- und Hüttentechnologie in Warm- und Kaltbandwalzstraßen eingesetzt werden, verwenden als Schmierstoffe Öle, wobei bevorzugt Mineralöle zum Einsatz kommen. Die Viskosität des Öls sorgt für einen ausreichenden Schmierfilm, der die rotierenden Teile von den feststehenden Teilen sicher trennt. Im Gleitprozess wird durch die innere viskose Reibung Wärme erzeugt, die zu einer Erhöhung der Öltemperatur und zu einem Abfall der Viskosität des Schmieröls führt. Dies wiederum führt zwangsläufig nachteilig zu einer Reduzierung der Tragfähigkeit des Gleitlagers.

Eine weitere Aufgabe des Schmierstoffs ist es, die entstehende Wärme aus dem Lager abzuführen.

Nachteilig sind bei der vorbekannten Vorgehensweise die folgenden Umstände:
Bei üblicherweise eingesetzten Mineralölen in Gleitlagern kann es zu Undichtigkeiten kommen und so beispielsweise Kühlwasser aus dem Walzprozess in den Kreislauf des Lagers gelangen. Dieses kann hierdurch geschädigt werden. Um dies zu vermeiden, muss in einem aufwendigen und teuren Prozess das Schmieröl für das Gleitlager entwässert werden, um zu vermeiden, dass Wasser, welches sich nicht mit dem Öl mischt, zu Lagerschäden führt. Außerdem verschlechtert der Wasserabscheideprozess die Haltbarkeit des Öles.

Andererseits kann es infolge von Undichtigkeiten des Gleitlagers dazu kommen, dass Öl aus dem Gleitlagerkreislauf in den Walzprozess gelangt. Durch undefiniertes und ungewolltes Schmieren des Walzspaltes (das Öl läuft in diesem Falle beispielsweise über die Stützwalze auf die Arbeitswalze) kann es beispielsweise zu Prozess-Instabilitäten oder Beeinträchtigungen der Produktqualität kommen.

In Kaltwalzstraßen führt eine Vermischung von niedrigviskosem Walzöl mit hochviskosem Gleitlageröl zur Beeinträchtigung der Schmierung im Walzspalt und zu ungünstigem Abdampfverhalten. Außerdem können Rückstände des hochviskosen Gleitlageröls auf dem Walzprodukt zu Problemen bei der Weiterverarbeitung desselben führen, beispielsweise im Glühprozess.

Ein weiteres Problem besteht darin, dass das Mineralöl aus dem Gleitlager auf der heißen Walzgutoberfläche brennen kann.

Der Erfindung liegt daher die **Aufgabe** zugrunde, ein Verfahren der eingangs genannten Art vorzuschlagen, mit dem die oben genannten Probleme behoben werden können. Insbesondere soll in Walzwerken ein verbesserter Betrieb möglich sein, der nicht durch die aufgezeigten Probleme gestört wird.

Die **Lösung** dieser Aufgabe durch die Erfindung ist dadurch gekennzeichnet, dass als Schmierstoff für das Gleitlager ein wasserbasiertes, einphasiges Fluid verwendet wird, dem mindestens ein viskositätserhöhendes Additiv zugesetzt ist, wobei dem Wasser als Additiv
biopolymeres Material zugegeben ist, wobei das biopolymere Material insbesondere Zellulose, Stärke und/oder bakterielle Polysaccaride ist, oder
ein Salz einer modifizierten Zellulose als einziger polymerer Schmierstoff zugesetzt ist.

Der Wasseranteil im Schmierstoff beträgt bevorzugt mindestens 50 Vol.-Prozent. Dem Fluid kann mindestens ein zusätzliches funktionales Additiv zugegeben sein. Hierbei kommt beispielsweise ein Korrosionsschutzverbesserer oder Schmierverbesserer infrage, welcher dem Fluid beigemischt werden kann.

Schließlich kann vorgesehen werden, dass dem Wasser ein Schmierstoffverdicker zugegeben ist, wobei dieser ausgewählt ist aus der Gruppe bestehend aus Metallseifen aus Mono- und/oder Dicarbonsäuren, Harnstoffen, Schichtsilikaten, Festschmierstoffen und Aerosil.

Anstelle des üblicherweise eingesetzten Mineralöls in Gleitlagern, insbesondere an Stützwalzenlagern in Walzstraßen, wird demgemäß ein einphasiger, wasserbasierter und mit Additiven versetzter Schmierstoff eingesetzt. Durch die Additive können gewünschte Viskositäten eingestellt werden.

Da das Schmiermedium nun wasserbasiert ist, besitzt es eine höhere Wärmekapazität sowie eine höhere Dichte, verglichen mit den bislang eingesetzten Mineralölen. Dies führt zu einem verbesserten Wärmeabtransport aus dem Schmierspalt des Gleitlagers. Außerdem bietet der wasserbasierte Schmierstoff eine deutlich geringere Temperaturabhängigkeit der Viskosität. Das einphasige Medium ist sehr gut feinfiltriebar, wofür mehrphasige Emulsionen ungeeignet sind.

Durch die vorgeschlagene Vorgehensweise ergeben sich verschiedene Vorteile, die sich in besonderer Weise, aber nicht ausschließlich, beim Einsatz an Stützwalzenlagern von Walzwerken bemerkbar machen:
Die Vermischung des wasserbasierten, einphasigen Schmiermittels mit Prozesswasser (z. B. Kühlwasser) ist deutlich weniger kritisch, da das Arbeitsmittel des Gleitlagers wasserbasiert ist. Es muss lediglich die Konzentration der Additive korrigiert werden.

Eine Leckage des einphasigen, wasserbasierten Gleitlagermediums hat geringeren Einfluss auf den Kaltwalzprozess und keinen Einfluss auf den Warmwalzprozess.

Das einphasige, wasserbasierte Gleitlagermedium ist im Unterschied zum Mineralöl nicht brennbar, was sich bei heißen Walzgutoberflächen in besonderer Weise vorteilhaft bemerkbar macht.

Der Kreislauf der Lagerschmierung kann weiterhin auch wegen der besseren Wärmeabfuhr kleiner ausgelegt werden. Dies betrifft insbesondere die Tankgröße und die Rohrleitungsquerschnitte sowie die installierte Pumpenleistung.

Wasserbasierte Schmierstoffe sind als solche bekannt und können für das vorgeschlagene Verfahren eingesetzt werden. Insbesondere wird auf die DE 10 2009 039 626 A1, auf die WO 2009/106359 A1, auf die CN 102010780 B und auf die CN 101718297 B ausdrücklich Bezug genommen, wo entsprechende wasserbasierte und hier taugliche Schmierstoffe detailliert beschrieben sind.

## Patentansprüche

1. Verfahren zum Betrieb einer Warm- oder Kaltwalzstraße in einer walz- oder hüttentechnischen Anlage, wobei die Warm- oder Kaltwalzstraße eine Anzahl von Walzgerüsten mit Stützwalzen umfasst, die mit mindestens einem Gleitlager gelagert sind, wobei das Gleitlager mit einem Schmierstoff versorgt wird, **dadurch gekennzeichnet,**
**dass** als Schmierstoff für das Gleitlager ein wasserbasiertes, einphasiges Fluid verwendet wird, dem mindestens ein viskositätserhöhendes Additiv zugesetzt ist, wobei dem Wasser als Additiv
biopolymeres Material zugegeben ist, wobei das biopolymere Material insbesondere Zellulose, Stärke und/oder bakterielle Polysaccaride ist, oder
ein Salz einer modifizierten Zellulose als einziger polymerer Schmierstoff zugesetzt ist.

2. Verfahren nach Anspruch 1, **dadurch gekennzeichnet, dass** der Wasseranteil im Schmierstoff mindestens 50 Vol.-Prozent beträgt.

3. Verfahren nach Anspruch 1 oder 2, **dadurch gekennzeichnet, dass** dem Fluid mindestens ein zusätzliches funktionales Additiv zugegeben ist.

4. Verfahren nach einem der Ansprüche 1 bis 3, **dadurch gekennzeichnet, dass** dem Wasser ein Schmierstoffverdicker zugegeben ist, wobei dieser ausgewählt ist aus der Gruppe bestehend aus Metallseifen aus Mono- und/oder Dicarbonsäuren, Harnstoffen, Schichtsilikaten, Festschmierstoffen und Aerosil.

## Claims

1. Method of operating a hot-rolling or cold-rolling train in a rolling or metallurgical plant, wherein the hot-rolling or cold-rolling train comprises a plurality of roll stands with backing rolls which are mounted by at least one slide bearing, wherein the slide bearing is supplied with a lubricant,
**characterised in that**
a water-based single-phase fluid to which at least one viscosity-increasing additive is added is used as lubricant for the slide bearing, wherein biopolymer material is added as additive to the water, wherein the biopolymer material is, in particular, cellulose, starch and/or bacterial polysaccharide, or a salt of a modified cellulose is used as single polymer lubricant.

2. Method according to claim 1, **characterised in that** the water component in the lubricant is at least 50 volume percent.

3. Method according to claim 1 or 2, **characterised in that** at least one additional functional additive is added to the fluid.

4. Method according to any one of claims 1 to 3, **characterised in that** a lubricant thickener is added to the water, wherein the thickener is selected from the group consisting of metal soaps of monocarboxylic and/or dicarboxylic acids, ureas, phyllosilicates, solid lubricants and Aerosil.

## Revendications

1. Procédé destiné à l'exploitation d'un train de laminoir à chaud ou à froid dans une installation de laminage ou sidérurgique, dans lequel le train de laminoir à chaud ou à froid comprend un certain nombre de cages de laminoir équipées de cylindres de support qui sont montés avec au moins un palier du type à glissement, dans lequel le palier du type à glissement est alimenté avec un lubrifiant, **caractérisé en ce que** l'on utilise à titre de lubrifiant pour le palier du type à glissement, un fluide monophasique à base d'eau dans lequel au moins un additif qui augmente la viscosité a été incorporé, dans lequel une matière biopolymère a été ajoutée à l'eau, à titre d'additif; dans lequel la matière biopolymère représente en particulier de la cellulose, de l'amidon et/ou des polysaccharides bactériens, ou bien un sel d'une cellulose modifiée a été ajouté à titre de lubrifiant polymère unique.

2. Procédé selon la revendication 1, **caractérisé en ce que** la fraction d'eau dans le lubrifiant s'élève à au moins 50 % en volume.

3. Procédé selon la revendication 1 ou 2, **caractérisé en ce qu'**au moins un additif fonctionnel supplémentaire a été ajouté au fluide.

4. Procédé selon l'une quelconque des revendications 1 à 3, **caractérisé en ce qu'**un agent épaississant pour lubrifiant a été ajouté à l'eau ; dans lequel l'agent en question a été choisi parmi le groupe constitué par des sels métalliques d'acides monocarboxyliques et/ou dicarboxyliques, des urées, des silicates stratifiés, des lubrifiants solides et de l'Aerosil.
